Europäisches Patentamt

European Patent Office

Office européen des brevets

(19)

(11) Veröffentlichungsnummer: **0 226 828 B1**

## (12) EUROPÄISCHE PATENTSCHRIFT

(45) Veröffentlichungstag der Patentschrift: **18.09.91**

(51) Int. Cl.⁵: **G01P 1/04**

(21) Anmeldenummer: **86116100.8**

(22) Anmeldetag: **20.11.86**

Die Akte enthält technische Angaben, die nach dem Eingang der Anmeldung eingereicht wurden und die nicht in dieser Patentschrift enthalten sind.

(54) **Befestigung eines Tachogenerators an einer Antriebswelle.**

(30) Priorität: **18.12.85 DE 3544751**

(43) Veröffentlichungstag der Anmeldung:
**01.07.87 Patentblatt 87/27**

(45) Bekanntmachung des Hinweises auf die
Patenterteilung:
**18.09.91 Patentblatt 91/38**

(84) Benannte Vertragsstaaten:
**AT BE CH DE FR GB IT LI NL SE**

(56) Entgegenhaltungen:
**DE-A- 3 038 005**
**DE-B- 1 221 058**
**US-A- 3 995 156**

(73) Patentinhaber: **Heidelberger Druckmaschinen Aktiengesellschaft**
**Kurfürsten-Anlage 52-60 Postfach 10 29 40**
**W-6900 Heidelberg 1(DE)**

(72) Erfinder: **Rodi, Anton**
**Karlsruher Strasse 12**
**W-6906 Leimen 3(DE)**
Erfinder: **Hofheinz, Walter**
**Wieblinger Weg 26**
**W-6900 Heidelberg 1(DE)**

(74) Vertreter: **Stoltenberg, Baldo Heinz-Herbert et al**
**c/o Heidelberger Druckmaschinen AG**
**Kurfürsten-Anlage 52-60**
**W-6900 Heidelberg 1(DE)**

EP 0 226 828 B1

## Beschreibung

Die Erfindung betrifft einen Tachogenerator nach dem erstem Teil des Anspruchs 1.

Es ist bekannt, Drehgeber an rotierenden Wellen anzubringen, um deren Rotationsbewegung in ein elektrisches Signal umzuwandeln, das eine Größe für die Drehgeschwindigkeit und deren Richtung darstellt. Als Drehgeber können dabei, je nach Bedarf und Anwendungsfall, Generatoren verwendet werden, die ausgangsseitig analoge Signale (Gleich- oder Wechselspannung) liefern oder Inkrementalgeber, welche digitale Informationen erzeugen.

Die Antriebe, z.B. Motoren, weisen abhängig von ihren zu übertragenden Momenten unterschiedliche Wellendurchmesser auf. Ebenso besteht bei handelsüblichen Generatoren keine einheitliche Normung bezüglich der Durchmesser der Antriebswellen, was sowohl für Generatoren mit Vollwellen- als auch für Generatoren mit Hohlwellenantrieb zutrifft. Aus diesem Grunde ist die Befestigung von Tachogeneratoren an den Antriebswellen problematisch, zum einen deshalb, weil die unterschiedlichen Durchmesser von Antriebswelle zum Wellenanschluß des Tachogenerators, zum anderen, weil Wellenversatz, Rundlauffehler und Unwuchten zwischen der Welle bzw. dem Hohlwellenanschluß des Tachogenerators und der Antriebswelle ausgeglichen werden müssen.

Aus diesem Grunde werden teils starre, teils elastische Zwischenkupplungen verwendet, die zwischen Antriebswelle und Tachogenerator eingebaut werden, wodurch jedoch eine unerwünschte Verlängerung der Antriebswelle und somit der Motorgesamtlänge bewirkt wird. Abgesehen davon, daß der hierzu erforderliche Platzbedarf oft nicht vorhanden ist, wirft die Montage und Demontage des Tachogenerators bei begrenzter Einbautiefe Probleme auf und ist somit sehr aufwendig und zeitraubend. Im übrigen bedarf der Einbau einer derartigen Zwischenkupplung größter Sorgfalt, da - insbesondere bei deren unsachgemäßer Montage - eine hohe Störanfälligkeit gegeben ist.

Infolge des großen Umkehrspiels haben elastische Zwischenkupplungen nur einen begrenzten Anwendungsbereich und sind für den Einsatz im Reversierbetrieb, z.B. beim Antrieb von Druckmaschinen, ungeeignet. Insbesondere bei digital messenden Inkrementalgebern ist jegliches Umkehrspiel unerwünscht und beeinflußt fehlerhaft deren Meßergebnis.

Die Verwendung derartiger Zwischenkupplungen wird überflüssig bei Tachogeneratoren, die bereits mit einem Hohlwellenanschluß in Form eines am Rotor zusätzlich befestigten Klemmringes zur direkten Anordnung des Tachogenerators auf der Antriebswelle ausgestattet sind. Nachteilig wirkt sich hierbei aus, daß der Klemmring über das Gehäuse des Tachogenerators hinausragt und somit dessen Aufbau unnötig vergrößert und daß beim Anziehen der durch den Klemmring hindurchragenden Klemmschraube der Tachogenerator zumindest leicht exzentrisch auf der Antriebswelle verspannt wird. Diese leicht exzentrische Anordnung verursacht Rundlauffehler bzw. sogenannte "Höhenschläge" der am Rotor befestigten Kodierscheibe, was insbesondere bei einer feinkodierten Skala mit mehreren Tausend Skalenteilen zu fehlerhaften Meßergebnissen führen kann. Da die Skalenteile als Kreissektoren ausgebildet sind, verändert sich infolge der "Höhenschläge" durch die leicht exzentrische Rotation der Kodierscheibe die jeweils von der Leseoptik wahrgenommene Breite eines Skalenteils, so daß dadurch teilweise zu viele bzw. teilweise zu wenig Inkremente gemessen werden.

Aus der DE-AS 30 38 005 ist es bekannt, den Stator eines Tachogenerators mit Hilfe einer langen Schraube, deren Gewinde in eine Tülle am Gehäuse eines Lüfters reicht, gegen Verdrehen, wenn auch nicht betriebssicher, zu stützen.

Demgemäß besteht die Aufgabe der Erfindung darin, mit geringem Aufwand eine kupplungslose Befestigung eines Tachogenerators an einer Antriebswelle unter Wahrung geringer Einbautiefe zu schaffen, die konstruktiv einfach gehalten ist und eine schnelle und sichere Montage bzw. Demontage des Tachogenerators ermöglicht.

Diese Aufgabe wird in allgemeiner Form gemäß dem Anspruch 1 gelöst.

Durch die Verlegung des Hohlwellenanschlusses in die Bohrung des Tachogenerators und dessen direkte Lagerung auf der Antriebswelle ergibt sich eine betriebssichere und wartungsfreie Anordnung, durch die jegliches Umkehrspiel ausgeschlossen und eine äußerst kurze Bauform des Antriebes eingehalten wird. Die Verwendung der erfindungsgemäßen Schnellspanneinrichtung hat nicht nur herstellungsmäßige, sondern auch zeitliche Vorteile bei der Montage gegenüber herkömmlichen Einrichtungen und die zentrische axiale Festklemmung des Tachogenerators an der Antriebswelle garantiert eine absolute Konzentrizität, wodurch eine genaue Inkrementalmessung gewährleistet ist.

In Weiterbildung des Erfindungsgedankens ergeben sich besonders vorteilhafte Ausgestaltungen aus den abhängigen Ansprüchen in Verbindung mit der zugehörigen Beschreibung und der Zeichnung.

Die mit Vorrichtungen nach den Ansprüchen 2 und 3 erzielten Vorteile bestehen neben einer kostengünstigen Herstellung insbesondere darin, daß die Montage bzw. Demontage des Tachogenerators infolge Einfachheit mittels nur eines einzigen Werkzeuges, z. B. eines Steck- oder Innensechskantschlüssels, durchgeführt werden und dabei kein Bauteil vergessen oder verloren gehen kann.

Die Weiterbildung des Erfindungsgedankens gemäß dem Kennzeichen des Anspruches 5 ermöglicht in vorteilhafter Weise, daß sich der Tachogenerator selbst nach langjährigem Einsatz in kürzester Zeit noch leicht ohne Spezialwerkzeug, wie z.B. eine Abziehvorrichtung, von der Antriebswelle demontieren läßt, da keine komplizierten Arbeitsgänge in Art und Reihenfolge einzuhalten sind, sondern nur ein einziger Arbeitsgang, das Lösen der Sicherungsschraube, anfällt.

Die Erfindung wird im folgenden anhand eines in der Zeichnung dargestellten Ausführungsbeispieles näher erläutert.

Es zeigt:

Fig. 1    eine geschnittene Darstellung eines an einer Antriebswelle mittels Schnellspanneinrichtung befestigten Tachogenerators,

Fig. 2    eine elastische Verdrehsicherung für den Tachogenerator nach der Erfindung,

Fig. 3    eine Anbringungsmöglichkeit eines Tachogenerators nach der Erfindung auf einer durchgehenden Welle und

Fig. 4    eine weitere elastische Verdrehsicherung des Tachlogenerators.

Eine aus einem Antriebsmotor 1 herausragende Antriebswelle 2 ist mit einem zylindrisch abgesetzten Wellenende 3 versehen, in das zentrisch ein Innengewinde 4 eingebracht ist, das an der Stirnseite der Antriebswelle 2 eine starke Ansenkung 5 aufweist. Auf dem Wellenende 3 ist mittels eines Hohlwellenanschlusses 6 ein Tachogenerator 7 angeordnet.

Der vorzugsweise mit einer Übergangspassung versehene Hohlwellenanschluß 6 ist Teil einer abgestuften Bohrung 8, die sich durch einen als Drehteil ausgebildeten Rotor 9 erstreckt. Der Rotor 9 ist mittels der Übergangspassung (Schiebesitz) auf das abgesetzte Wellenende 3, mit der hinteren Stirnfläche 36 gegen den Wellenbund 10 anstoßend, aufgesteckt. Auf der dem Antriebsmotor 2 zugewandten Seite ist der Rotor 9 mit einem abgesetzten Lagersitz 11 ausgestattet, auf dem Kugellager 12 angeordnet sind. Zur Motorseite hin stützt sich eines der Kugellager 12 an einem im Lagersitz 11 vor dem Wellenbund 10 eingelassenen Seegering 13 ab.

Auf den Kugellagern 12 ist ein Stator 14 angeordnet, der als Halterung für eine photoelektronische Abtasteinheit dient, die aus einem Sender 15 sowie einem Empfänger 16 besteht, zwischen denen eine am Rotor 9 mittels eines Feststellringes 18 fixierte Kodierscheibe 19 umläuft.

Die bauliche Verbindung zwischen dem Stator 14 und dem Rotor 9 wird über einen Lagerbefestigungsring 20 hergestellt, der an dem Stator 14 auf seiner der Kodierscheibe 19 zugewandten Seite befestigt ist und dabei seitlich einen der beiden Kugellager 12 überdeckt. In dem Stator 14 ist ein Arretierstift 21 eingelassen, der in eine am Gehäuse 22 des Antriebsmotors 2 vorgesehene Bohrung 23 hineinragt und dadurch den Stator 14 nebst daran befestigter photoelektrischer Abtasteinrichtung gegen Verdrehen in Umfangsrichtung sichert. Vorzugsweise wird als Arretierstift 21 ein Paßstift verwendet und die Bohrung 23 zum Kompensieren von Toleranzen mit einer elastischen Auskleidung, beispielsweise in Form einer Gummimuffe 24, ausgelegt. Auch kann es zweckmäßig sein, die Bohrung 23 als radiales Langloch auszuführen.

An dem Stator 14 ist außerdem ein den gesamten Generatoraufbau umschließendes Generatorgehäuse 25 befestigt, das zentrisch mit einer Schraubenöffnung 26 versehen ist. In die Schraubenöffnung 26 ist zwecks Verhinderung des Eindringens von Staub und Verunreinigungen eine Abdeckkappe 27, vorzugsweise aus Gummi oder Kunststoff, einsetzbar, die mittels eines am Generatorgehäuse 25 verschwenkbar angelenkten, elastischen Abdeckkappenhalters 28, z.B. in Form eines Federschuhs, gegen Herausfallen gesichert ist.

Im Zentrum des Tachogenerators 7 ist eine zweiteilige Schnellspanneinrichtung 17 angeordnet, welche aus einer Federscheibe 29, deren Federkraft gegen die Stirnseite der Antriebswelle 1 gerichtet ist, sowie einer durch diese hindurchragenden Schnellspannschraube 30 besteht. Als Schnellspannschraube 30 wird zweckmäßigerweise eine handelsübliche Schraube verwendet, die durch die Schraubenöffnung 26 des Generatorgehäuses 25 eingeführt und von dem ohnehin zumeist vorhandenen und nicht extra zu fertigenden Innengewinde 4 der Antriebswelle 1 aufgenommen wird. Auf der Spannschraube 30 sind, von deren Schraubenkopf her gesehen, nacheinander die Federscheibe 29, eine Distanzhülse 31 sowie ein Sicherungsring 32 angeordnet. Die Federscheibe 29 ist als konzentrische, spreizbare Federscheibe ausgebildet und vorzugsweise an einem Absatz innerhalb der abgestuften Bohrung 8 des Rotors 9 formschlüssig befestigt, z.B. durch punktweises Umbördeln des Bohrungsabsatzes auf die Federscheibe 29, durch Punktschweißen, Vernieten usw. Die Distanzbüchse 31 hat eine den jeweiligen Verhältnissen, d.h. der Länge des abgesetzten Wellenendes 3 der Antriebswelle 1 sowie der Baubreite und Bohrung 8 des Tachogenerators 7 genau angepaßte Länge und ist außerdem mit einer Bohrung 33 versehen, deren Innendurchmesser geringfügig kleiner ist als der Außendurchmesser des nachgeordneten Sicherungsringes 32. Als Sicherungsring 32 kann ein handelsüblicher O-Ring oder stattdessen vorzugsweise ein Stahlring verwendet werden.

Zweckmäßigerweise wird die Schnellspanneinrichtung 17 bereits beim Hersteller gemäß den Kundenangaben mit dem Tachogenerator 7 zu einer nur mittels Werkzeug zu lösenden Baueinheit zusammengesetzt. In diesem Fall verhindert der Sicherungsring 32 in Verbindung mit der formschlüssigen Befestigung der Federscheibe 29 im Rotor 9 eine Trennung der Schnellspanneinrichtung 17 vom Tachogenerator 7. Es ist natürlich ebensogut möglich, daß der Anwender selbst die Federscheibe 29 im Rotor 9 befestigt, die Schnellspannschraube 30 hindurchsteckt, auf diese die genau angepaßte Distanzhülse 31 aufsetzt und letztendlich den Sicherungsring 32 in den Gewindeschaft der Spannschraube 30 einläßt.

Vor der eigentlichen Montage des Tachogenerators 7 wird der Abdeckkappenhalter 28 verschwenkt und die Verschlußkappe 27 von der Schraubenöffnung 26 entfernt. Der Tachogenerator 7 wird nun auf das zylindrisch abgesetzte Wellenende 3 der Antriebswelle 1 derart aufgesetzt, daß der Arretierstift 21 der Bohrung 23 im Motorgehäuse 22 gegenübersteht. Danach wird die Schnellspannschraube 30 mittels eines gewöhnlichen Schraubenschlüssels sukzessive angezogen, wodurch sich der Rotor 9 mit seinem Hohlwellenanschluß 6 auf das zylindrisch abgesetzte Wellenende 3 aufschiebt, bis er sich mit der hinteren Stirnfläche 36 gegen den Wellenbund 10 anlegt und der Arretierstift 21 in die Bohrung 23 eingreift.

Im angezogenen Zustand der Schnellspannschraube 30 kommt der Sicherungsring 32 im Bereich der Ansenkung 5 des Innengewindes 4 der Antriebswelle 1 zu liegen und der Antrieb des Rotors 9 ist nicht nur reibschlüssig, sondern durch die Befestigung der Federscheibe 29 im Rotor 9 auch formschlüssig sichergestellt. Ein Überdrehen der Federscheibe 29 infolge zu großen Anzugsmomentes der Schnellspannschraube 30 ist praktisch unmöglich, da die Länge der Distanzhülse 31 so bemessen ist, daß sich die Federscheibe 29 nicht plastisch verformen kann und dadurch der für die Aufrechterhaltung des Reibschlusses erforderliche Federdruck in Richtung gegen die Antriebswelle 1 stets aufrechterhalten bleibt, unabhängig vom Anzugsmoment der Schnellspannschraube 30.

Die Demontage des Tachogenerators 7 erfolgt durch Umkehrung des einzig erforderlichen Arbeitsganges durch einfaches Lösen der Schnellspannschraube 30. Sobald der Sicherungsring 32 nach einigen Umdrehungen der Schnellspannschraube 30 an die Distanzhülse 31 stößt, wirkt er als Abziehvorrichtung für den Tachogenerator 7 von der Antriebswelle 1. Beim weiteren Herausschrauben der Schnellspannschraube 30 drückt die Distanzhülse 31 gegen die formschlüssig im Rotor 9 befestigte Federscheibe 29 und bewirkt dadurch ein Lösen und Abziehen des Tachogenerators 7 vom zylindrisch abgesetzten Wellenende 3.

Da sowohl bei der Montage als auch bei der Demontage nur ein einziger Arbeitsgang erforderlich ist, der infolge Einfachheit das Auftreten von Fehlern ausschließt, können diese Arbeiten von ungeschultem Hilfspersonal, zumindest unter Beaufsichtigung, durchgeführt werden. Durch die paßgenaue konzentrische Anordnung des Tachogenerators 7 und dessen absolut zentrische Festklemmung an der Antriebswelle 1 treten Rundlauffehler so gut wie gar nicht auf. Sollten dennoch geringfügige Toleranzen, egal ob in axialer oder radialer Richtung, vorhanden sein, so werden diese durch die Gummimuffe 24 der Bohrung 23 im Motorgehäuse 22 aufgenommen und kompensiert. Die Möglichkeit des Festklemmens des Tachogenerators 7 an der Antriebswelle 1 mit großem Anzugsmoment in Verbindung mit der Ausbildung des Arretierstiftes 21 als Paßstift mit zugehöriger Paßbohrung 23 im Motorgehäuse 22 hält das Umkehrspiel in derart geringen Grenzen, daß es die inkrementale Wegmessung, auch bei feinkodierter Impulsscheibe, nicht mehr feststellbar beeinflußt.

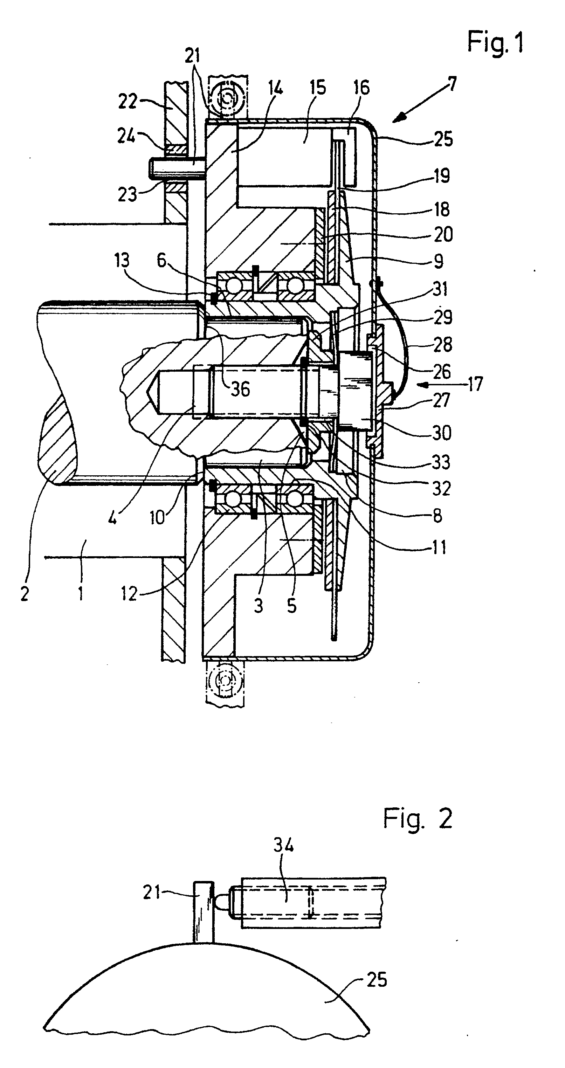

Wie aus Fig. 2 zu ersehen, kann die Verdrehsicherung des Stators 14 auch mit einer anders gestalteten federnden Verbindung erfolgen, und zwar treffen die am Stator 14 fixierten Arretierstifte 21 auf am Motorgehäuse 22 befestigte Druckfederelemente 34. Die Druckfederelemente 34 weisen eine gleiche Federkennlinie auf. Ihre Federkraft wirkt in Richtung des jeweils anstoßenden Arretierstifts 21, dabei liegt das eine Druckfederelement 34 in und das andere entgegen der Drehrichtung der Antriebswelle 2 am zugeordneten Arretierstift 21 an. Vorteilhaft ist, wenn die beiden Druckfederelemente 34 bei Wellenstillstand unter geringer Vorspannung stehen.

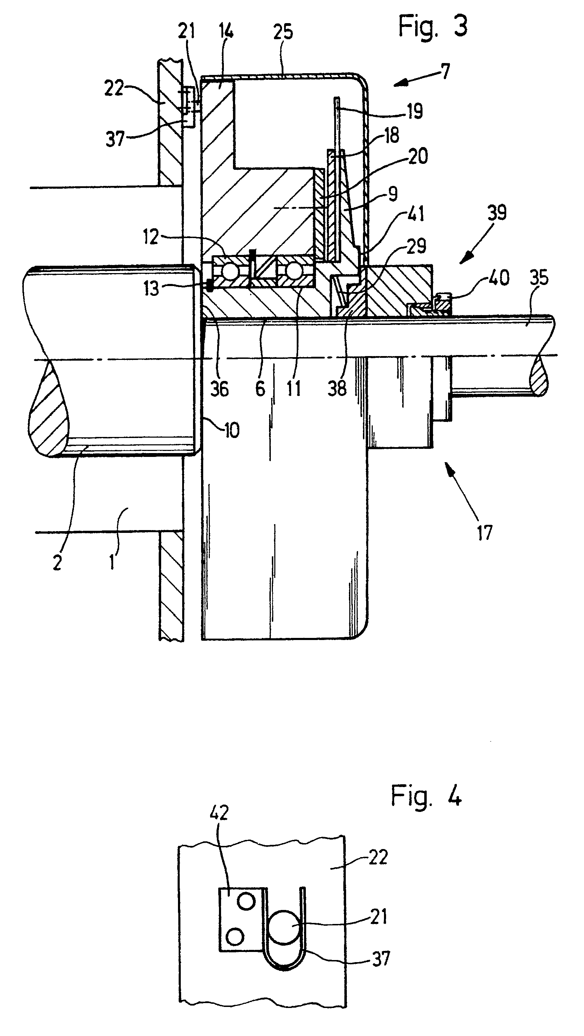

Die Anbringung eines Tachogenerators 7 nach der Erfindung auf einer durchgehenden Welle ist in Fig. 3 dargestellt. Die Antriebswelle 2 des Antriebsmotors 1 ist zu der durchgehenden Welle 35 abgesetzt und bildet somit den Wellenbund 10. Hieran liegt die hintere Stirnfläche 36 des Rotors 9 bündig an. Der Hohlwellenanschluß 6 des Rotors 9 ist im Gegensatz zu der Ausführungsform nach Fig. 1 als durchgehend zylindrische Bohrung ausgeführt und mit einem Schiebesitz über die Hohlwelle 35 geschoben. Die Ausbildung des Rotors 9 entspricht im wesentlichen der in dem ersten Beispiel beschriebenen. Auf ihm ist die Kodierscheibe 19 in derselben Weise mit einem Feststellring 18 angebracht. Der Stator 14 hat praktisch die gleiche Ausbildung wie in dem zuvor beschriebenen Beispiel und ist über die beiden Kugellager 12 auf dem Rotor 9 gelagert. Auch in diesem Fall sind die Kugellager 12 an der einen Seite durch einen Seegering 13 und an der anderen Seite durch den am Stator 14 befestigten Lagerbefestigungsring 20 in axialer Richtung gesichert. Das ganze Innere des Tachogenerators 7 deckt ein mit dem Stator 14 fest verbundenes Generatorgehäuse 25 ab. Mittels eines Konus-Spannelementes 39 wird der Rotor 9 in axialer Richtung zum Wellenbund 10 der Antriebswelle 2 hin über einen abgestuften Spannring 38 und die spreizbare Federscheibe 29 gedrückt. Das Konus-Spannelement 39 und die Federscheibe 29 bilden die Schnellspannvorrichtung 17. Damit die hintere Stirnfläche 36 des Rotors 9 mit Sicherheit plan an dem Wellenbund 10 anliegt, wird das Konus-Spannelement 39 vor dem Verklemmen solange in axialer Richtung zum Motor hin auf der durchgehenden Welle 35 verschoben, bis der abgestufte Spannring 38 an der vorderen Stirnfläche 41 des Rotors 9 zur Anlage kommt. Sobald dies geschehen ist, wird mittels Drehen der Spannmutter 40 das Konus-Spannelement 39 auf der durchgehenden Welle 35 unverrückbar verklemmt. Die spreizbare Federscheibe 29 ist nun derartig gespannt, daß sie in radialer und axialer Richtung eine genügend große Kraft ausübt, um die hintere Stirnfläche 36 des Rotors 9 bündig an den Wellenbund 10 der Antriebswelle 2 anzulegen. Damit ist eine schlag- und verdrehfehlerfreie Anbringung des Kodierscheibe 19 tragenden Rotors 9 auf der Antriebswelle 2 gewährleistet.

Das als Teil der Schnellspannvorrichtung 17 eingesetzte Konus-Spannelement 39 ist ein im freien Handel beziehbares Bauteil, beispielsweise bei der Firma Ringspann Tollok.

Zwecks Verdrehsicherung des Stators 14 kann, wie in Fig. 4 gezeigt, eine U-förmig gebogene Blattfeder 37 vorgesehen sein, die über eine abgewinkelte Halteplatte 42 am Motorgehäuse 22 fest vernietet ist. In die U-förmige Blattfeder 37 ist der am Stator 14 befestigte Arretierstift 21 spielfrei eingeführt. Fig. 3 zeigt nur eine Verdrehsicherung. Es können aber beispielsweise auch zwei vorgesehen sein.

Der Rotor (9) kann so ausgebildet sein, daß die Bearbeitung des Hohlwellenanschlusses (6), des Lagersitzes (11) und der Aufnahmezylinderfläche für die Kodierscheibe (19) zur Vermeidung von Rundlauffehlern aus einer Richtung möglich ist.

Selbstverständlich ist die Erfindung nicht nur auf die in den Figuren darestellten und in der Beschreibung niederge Selbstverständlich ist die Erfindung nicht nur auf die in den Figuren dargestellten und in der Beschreibung niedergelegten Ausführungsformen beschränkt, die lediglich als ein die Erfindung nicht begrenzendes Beispiel anzusehen sind. Es versteht sich von selbst, daß vielfältige bauliche Ausgestaltungen und insbesondere die Verwendung äquivalenter mechanischer Bauteile im abgesteckten Rahmen der Erfindung liegen. Beispielsweise kann eine durchgehende Antriebswelle 2 vorgesehen sein, in die eine Nut eingestochen ist zur Aufnahme eines Paßrings, der die Aufgabe des Wellenbundes 10 übernimmt.

TEILELISTE

| | |
|---|---|
| 1 | Antriebsmotor |
| 2 | Antriebswelle |
| 3 | Wellenende |
| 4 | Innengewinde |
| 5 | Ansenkung |
| 6 | Hohlwellenanschluß |
| 7 | Tachogenerator |
| 8 | Bohrung |
| 9 | Rotor |
| 10 | Wellenbund |
| 11 | Lagersitz |
| 12 | Kugellager |
| 13 | Seegering |
| 14 | Stator |
| 15 | Sender |
| 16 | Empfänger |
| 17 | Schnellspannvorrichtung |
| 18 | Feststellring |
| 19 | Kodierscheibe |
| 20 | Lagerbefestigungsring |
| 21 | Arretierstift |
| 22 | Motorgehäuse |
| 23 | Bohrung |
| 24 | Gummimuffe |
| 25 | Generatorgehäuse |
| 26 | Schraubenöffnung |
| 27 | Abdeckkappe |
| 28 | Abdeckkappenhalter |
| 29 | Federscheibe |
| 30 | Schnellspannschraube |
| 31 | Distanzbüchse |
| 32 | Sicherungsring |
| 33 | Bohrung |
| 34 | Druckfederelement |
| 35 | durchgehende Welle |
| 36 | hintere Stirnfläche |
| 37 | U-förmige Blattfeder |
| 38 | Spannring |
| 39 | Konus-Spannelement |
| 40 | Spannmutter |
| 41 | vordere Stirnfläche |
| 42 | Halteplatte |

**Patentansprüche**

1. Tachogenerator in kurzer Bauform mit einem Hohlwellenanschluß und einem Klemmelement zum Fixieren auf einer rotierenden Antriebswelle, wobei der Stator des Tachogenerators zur Verdrehsicherung mit einem feststehenden Maschinenteil verbunden ist,
   **dadurch gekennzeichnet,**
   daß der Hohlwellenanschluß (6) Teil des Rotors (9) des Tachogenerators ist und auf der Antriebswelle (2) drehfest angebracht ist, daß der Stator (14) über Lager (12) auf dem Rotor (9), dem Träger der Kodierscheibe (19), frei drehbar gelagert ist und daß die hintere Stirnfläche (36) des Rotors (9) von dem Klemmelement plan gegen einen Wellenbund (10) der rotierenden Antriebswelle (2) angelegt ist.

2. Tachogenerator nach Anspruch 1,
   **dadurch gekennzeichnet,**
   daß zur reib- und/oder formschlüssigen Mitnahme des Rotors (9) auf der Antriebswelle (2) eine Schnellspannvorrichtung (17) mit einer verdrehgesicherten Federscheibe (29) mit axial gegen den Wellenbund (10) gerichteter Federkraft, sowie mit einem in axialer Richtung verschraubbaren, konzentrisch angeordneten Spannelement (30 bzw. 39) vorgesehen ist.

3. Tachogenerator nach Anspruch 1 oder 2,
   **dadurch gekennzeichnet,**
   daß zur Verdrehsicherung des Stators (14) zwischen diesem und dem feststehenden Motorgehäuse (22) zumindest zwei federnde, jedoch ausreichend drehwinkelstarre Verbindungen (21, 23, 24) in diametraler Anordnung vorgesehen sind.

4. Tachogenerator nach Anspruch 3,
   **dadurch gekennzeichnet,**
   daß die federnden Verbindungen aus am Stator (14) fixierten Arretierstiften (21) und den am Motorgehäuse (22) befestigten Druckfederelementen (34) mit gegen die Arretierstifte (21) gerichteter Federkraft und gleicher Federkennlinie bestehen, wobei das eine Druckfederelement (34) in und das andere (34) entgegen der Drehrichtung der Antriebswelle (2) am jeweiligen Arretierstift (21) anliegt und die beiden Druckfederelemente (34) im Wellenstillstand vorzugsweise unter geringer Vorspannung stehen.

5. Tachogenerator nach einem oder mehreren der vorangehenden Ansprüche,
   **dadurch gekennzeichnet,**
   daß ein beim Anziehen des Spannelementes (30 bzw. 40) den Federweg der Federscheibe (29) begrenzendes und gleichzeitig dessen plastische Verformung verhinderndes Distanzelement (31 bzw. 38) vorgesehen ist.

6. Tachogenerator nach einem oder mehreren der vorangehenden Ansprüche,
   **dadurch gekennzeichnet,**
   daß im Zentrum eines Generatorgehäuses (25) eine Schraubenöffnung (26) eingelassen ist, in die eine unverlierbar gesicherte Abdeckkappe (27) einsetzbar ist.

7. Tachogenerator nach einem oder mehreren der vorangehenden Ansprüche,
   **dadurch gekennzeichnet,**
   daß das Spannelement als zentrisch in das Wellenende (3) einschraubbare Spannschraube (30) ausgebildet ist.

8. Tachogenerator nach einem oder mehreren der vorangehenden Ansprüche,
   **dadurch gekennzeichnet,**
   daß das Spannelement als axial verschiebbares, auf der Welle durch Verdrehen einer Spannmutter (40) feststellbares Konus-Spannelement (39) ausgebildet ist.

9. Tachogenerator nach einem oder mehreren der vorangehenden Ansprüche,
   **gekennzeichnet**
   durch eine derartige Ausbildung des Rotors (9), daß die Bearbeitung des Hohlwellenanschlusses (6), des Lagersitzes (11) und der Aufnahmezylinderfläche für die Kodierscheibe (19) zur Vermeidung von Rundlauffehlern aus einer Richtung möglich ist.

10. Tachogenerator nach einem oder mehreren der vorangehenden Ansprüche,
    **dadurch gekennzeichnet,**
    daß mit Hilfe eines Sicherungsringes (32) in Verbindung mit der Federscheibe (29) die Schnellspannschraube (30) unverlierbar gesichert ist.

11. Tachogenerator nach einem oder mehreren der vorangehenden Ansprüche,
    **dadurch gekennzeichnet,**
    daß zur Verdrehsicherung des Stators (14) am Motorgehäuse (22) U-förmig gebogene Blattfedern (37) befestigt sind, in die am Stator angebrachte Arretierstifte (21) spielfrei hineinragen.

12. Tachogenerator nach Anspruch 1,
    **dadurch gekennzeichnet,**
    daß das Klemmelement als eine Schnellspannvorrichtung (17) mit einer verdrehgesicherten Federscheibe (29) sowie mit einem in axialer Richtung konzentrisch angeordneten Spannelement (30 bzw. 39) mit auf den Rotor (9) sowohl in radialer Richtung als auch in Richtung des Wellenbundes (10) gerichteter Spannkraft ausgebildet ist.

13. Tachogenerator nach einem oder mehreren der vorangehenden Ansprüche,
    **dadurch gekennzeichnet,**

daß auf einer durchgehenden Antriebswelle 2 eine Nut eingestochen ist, in die ein Paßring eingesetzt ist, der einen dem Wellenbund (10) entsprechenden Anschlag bildet.

## Claims

1. Tachogenerator of compact construction including a hollow shaft connection and a clamping element for fixing said tachogenerator onto a rotating drive shaft, said tachogenerator comprising a stator which is connected to a stationary machine part in order to be secured against rotation,
characterized in
that said hollow shaft connection (6) is part of a rotor (9) of said tachogenerator and is arranged on said drive shaft (2) so as to be fixed against rotation, that via bearings (12) said stator (14) is mounted on said rotor (9), which bears a coding disk (19), so as to be freely rotatable, and that a rear end face (36) of said rotor (9) is brought flatly into engagement with a shaft collar (10) of said rotating drive shaft (2) by said clamping element.

2. Tachogenerator according to Claim 1,
characterized in
that for frictionally and/or form-fittingly driving the rotor (9) a quick-acting clamping device (17) is provided on the drive shaft (2), said quick-acting clamping device comprising a spring washer (29) secured against rotation and having a spring force which is directed axially towards said shaft collar (10), and a clamping element (30, 39) which is arranged concentrically and is screwable in axial direction.

3. Tachogenerator according to Claim 1 or Claim 2,
characterized in
that for securing the stator (14) against rotation there are provided between said stator and a stationary motor housing (22) at least two diametrically arranged connections (21, 23, 24) being resilient yet having an adequate rigidity with respect to the angle of rotation thereof.

4. Tachogenerator according to Claim 3,
characterized in
that the resilient connections consist of arresting pins (21) fixed to the stator (14) and of compression spring elements (34) attached to the motor housing (22), said compression spring elements having identical spring characteristics and spring forces directed towards said arresting pins (21), one of said compression spring elements (34) engaging a respective arresting pin (21) in rotating direction of the drive shaft (2) and the other compression spring element (34) engaging a respective arresting pin (21) in a direction opposite to the rotating direction of said drive shaft, both compression spring elements (34) being preferably slightly pretensioned in a standstill condition of said shaft.

5. Tachogenerator according to one or several of the preceding claims,
characterized in
that there is provided a spacer element (31, 38) which limits the travel of the spring washer (29) and, at the same time, prevents it from being deformed plastically, when tightening the clamping element (30, 40).

6. Tachogenerator according to one or several of the preceding claims,
characterized in
that in the centre of a generator housing (25) there is provided a screw opening (26) into which a covering cap (27) being secured against becoming lost can be inserted.

7. Tachogenerator according to one or several of the preceding claims,
characterized in
that the clamping element is designed as a clamping screw (30) which can be centrally screwed into a shaft end (3).

8. Tachogenerator according to one or several of the preceding claims,
characterized in
that the clamping element is designed as a cone-shaped clamping element (39) which can be axially displaced and locked on the shaft by turning a clamping nut (40).

9. Tachogenerator according to one or several of the preceding claims,
characterized
by desiging the rotor (9) such that it permits machining of the hollow shaft connection (6), a bearing seat (11) and a cylindrical surface receiving the coding disk (19) in order to avoid concentricity errors from one direction.

10. Tachogenerator according to one or several of the preceding claims,
characterized in
that the quick-acting clamping screw (30) is secured against becoming lost by means of a retaining ring (32), in connection with the spring washer (29).

11. Tachogenerator according to one or several of the preceding claims, characterized in that for securing the stator (14) against rotation U-shaped bent leaf spring (37) are attached to the motor housing (22), arresting pins (21), fastened to the stator, extending into said leaf springs free from play.

12. Tachogenerator according to Claim 1, characterized in that the clamping element is designed as a quick-acting clamping device (17) comprising a spring washer (29) secured against rotation and a clamping element (30, 39) concentrically arranged in axial direction, said clamping device having a clamping force directed in radial direction onto the rotor (9) as well as towards the shaft collar (10).

13. Tachogenerator according to one or several of the preceding claims, characterized in that a continuous drive shaft (2) is provided with a groove, a fitting ring which forms an abutment corresponding to the shaft collar (10) being received in said groove.

**Revendications**

1. Générateur tachymétrique de construction courte comportant un raccord d'arbre creux et un élément de serrage en vue de sa fixation sur un arbre d'entraînement tournant, le stator du générateur tachymétrique étant relié à une partie de machine fixe, pour empêcher sa rotation, caractérisé en ce que le raccord d'arbre creux (6) fait partie du rotor (9) du générateur tachymétrique et est placé fixe en rotation sur l'arbre d'entraînement (2), en ce que le stator (14) est monte librement tournant, par l'intermédiaire de paliers (12), sur le rotor (9), support du disque de codage (19) et en ce que la face frontale arrière (36) du rotor (9) est appliquée, par l'élément de serrage, de façon plane, contre un épaulement d'arbre (10) de l'arbre d'entraînement (2) tournant.

2. Générateur tachymétrique selon la revendication 1, caractérisé en ce qu'il est prévu, pour l'entraînement, par friction et/ou concordance de forme, du rotor (9) sur l'arbre d'entraînement (2), un dispositif de serrage rapide (17) avec une rondelle élastique (29) bloquée en rotation dont la force de serrage est dirigée axialement vers l'épaulement d'arbre (10), ainsi qu'avec un élément de serrage (30 ou 39) placé concentriquement, pouvant être vissé axialement.

3. Générateur tachymétrique selon la revendication 1 ou 2, caractérisé en ce que pour le blocage en rotation du stator (14), il est prévu, entre celui-ci et le carter-moteur (22) fixe, au moins deux liaisons (21, 23, 24) élastiques, mais suffisamment rigides en rotation, disposées diamétralement.

4. Générateur tachymétrique selon la revendication 3, caractérisé en ce que les liaisons élastiques sont constituées par des goupilles d'arrêt (21), fixées sur le stator (14) et par des éléments à ressort de pression (34), fixés sur le carter-moteur (22), dont la force de ressort est orientée vers les goupilles d'arrêt (21) et qui ont la même caractéristique de ressort, un élément à ressort de pression (34) s'appliquant dans le sens de rotation de l'arbre d'entraînement (2) et l'autre élément (34) s'appliquant dans le sens opposé à celui-ci, contre la goupille d'arrêt (21) respective et les deux éléments à ressort de pression (34) étant de préférence légèrement pré-tendus à l'arrêt de l'arbre.

5. Générateur tachymétrique selon une ou plusieurs des revendications précédentes, caractérisé en ce qu'il est prévu un élément d'écartement (31 ou 38) qui limite la course de la rondelle élastique (29), lorsqu'on serre l'élément de serrage (30 ou 40) et qui empêche en même temps sa déformation plastique.

6. Générateur tachymétrique selon une ou plusieurs des revendications précédentes, caractérisé en ce qu'une ouverture de vis (26) est pratiquée au centre d'un boîtier de générateur (25), ouverture dans laquelle peut être inséré un capuchon de fermeture (27) imperdable.

7. Générateur tachymétrique selon une ou plusieurs des revendications précédentes, caractérisé en ce que l'élément de serrage est une vis de serrage (30) pouvant être vissée au centre, dans l'extrémité d'arbre (3).

8. Générateur tachymétrique selon une ou plusieurs des revendications précédentes, caractérisé en ce que l'élément de serrage est un élément de serrage à cône (39) déplaçable axialement, pouvant être bloqué sur l'arbre, par rotation d'un écrou de serrage (40).

9. Générateur tachymétrique selon une ou plusieurs des revendications précédentes, caractérisé en ce que le rotor (9) est conçu de telle manière que l'usinage du raccord d'arbre creux (6), du siège de palier (11) et de la surface cylindrique de logement du disque de codage (19), soit possible dans un seul sens, pour éviter des faux ronds.

10. Générateur tachymétrique selon une ou plusieurs des revendications précédentes, caractérisé en ce que la vis de serrage rapide (30) est rendue imperdable à l'aide d'une bague d'arrêt (32), en liaison avec la rondelle élastique (29).

11. Générateur tachymétrique selon une ou plusieurs des revendications précédentes, caractérisé en ce que pour bloquer en rotation le stator (14), des ressorts à lame (37) en U dans lesquels s'engagent sans jeu des goupilles d'arrêt (21), placées sur le stator, sont fixés sur le carter-moteur (22).

12. Générateur tachymétrique selon la revendication 1, caractérisé en ce que l'élément de serrage est un dispositif de serrage rapide (17) avec une rondelle élastique (29), bloquée en rotation, ainsi qu'avec un élément de serrage (30 ou 39), disposé concentriquement en direction axiale, dont la force de serrage est dirigée vers le rotor (9) en direction radiale ainsi qu'en direction de l'épaulement d'arbre (10).

13. Générateur tachymétrique selon une ou plusieurs des revendications précédentes, caractérisé en ce qu'il est pratiqué sur un arbre d'entraînement (2) continu, une rainure dans laquelle est insérée une bague d'ajustage qui forme une butée correspondant à l'épaulement d'arbre (10).

Fig. 1

Fig. 2

Fig. 3

Fig. 4